# EUROPEAN PATENT APPLICATION

(11) **EP 2 866 422 A1**
(43) Date of publication of application: **29.04.2015**
(21) Application number: 14173965.6
(22) Date of filing: 25.06.2014
(51) Int. Cl.: H04L 29/12, H04L 29/08, G06F 11/20, H04L 29/14

(54) **Method of operating a server system with high availability**

(30) Priority: 23.10.2013 TW 102138270
(71) Applicant: Synology Incorporated, Taipei 103 (TW)
(72) Inventor: Chen, Kan-Yueh, 338 Taoyuan County (TW); Liu, Jia-Yu, 238 New Taipei City (TW); Chen, Yueh-Tse, 103 Taipei City (TW)
(74) Representative: Straus, Alexander

(57) **Abstract**

An ARP table is stored in a gateway. The ARP table corresponds a first external IP address of a first application server to a first MAC address of a first external network card of the first application server, and corresponds a second external IP address of a second application server to a second MAC address of a second external network card of the second application server. The first and second application servers will check the statuses of each other to see if any of them fails. If the first application server fails, the first external IP address will be added to the second external network card, and the ARP table will be updated to correspond the first external IP address to the second MAC address.

## Description

### Field of the Invention

The present invention relates to a method of operating a server system, and more particularly, a method of operating a server system with high availability and applicable to cloud service.

### Background of the Invention

For an application server cluster to achieve high availability for reducing downtime, prior art has disclosed an application server cluster with a master-slave structure and an application server cluster with backup servers.

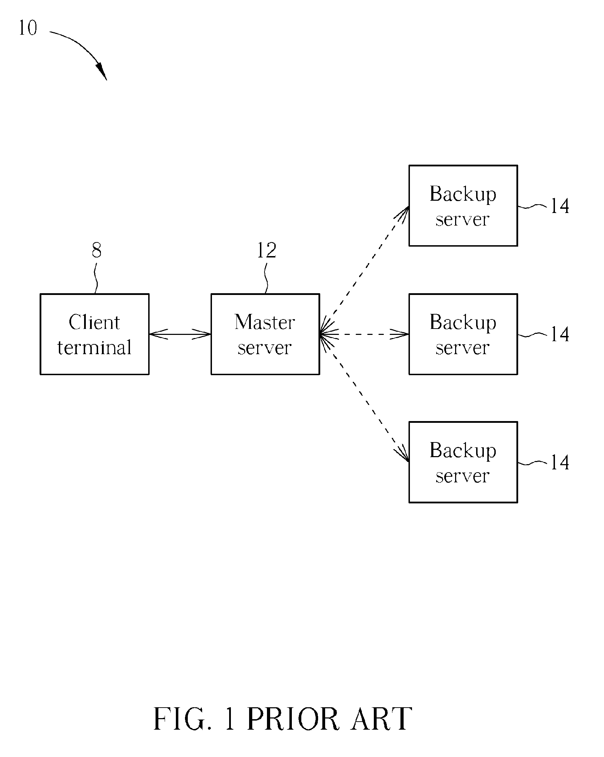

FIG. 1 illustrates an application server cluster 10 with a master-slave structure linked to a client terminal 8 according to the prior art. As shown in FIG. 1, the application server cluster 10 has a master server 12 and three backup servers 14. The three backup servers 14 are not in service when the master server 12 is in service. When the master server 12 fails, one of the three backup servers 14 will replace the master server 12 to assume the job of the master server 12. The above mentioned solution has led to waste of resource and unbalance of machine workload because when all of the servers 12, 14 can function well, all of the workload falls on the master server 12 instead of having the three backup servers 14 to share the workload of the master server 12. When the master server 12 fails, one of the three backup servers 14 replaces the master server 12 to keep providing service, but the remaining two backup servers 14 are not sharing the workload of the one which replaces the master server 12.

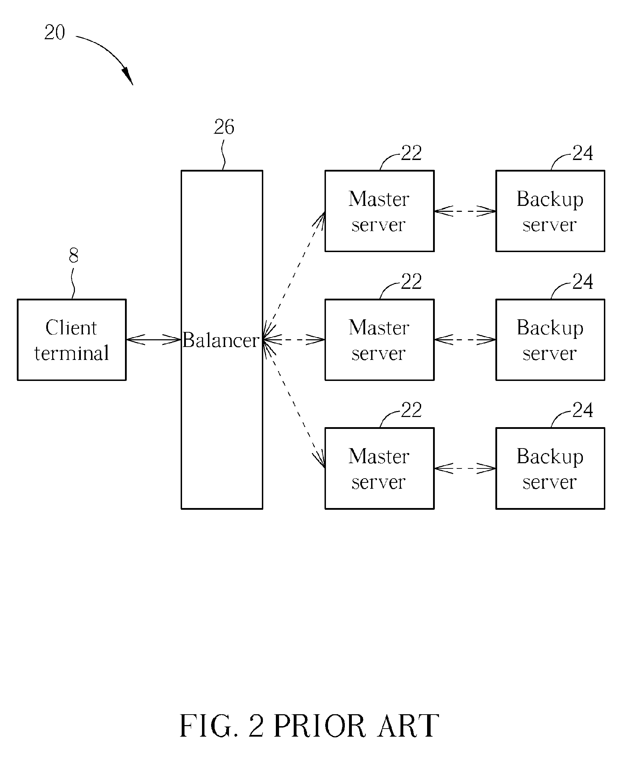

FIG. 2 illustrates an application server cluster 20 with backup servers 24 linked to a client terminal 8 according to the prior art. As shown in FIG. 2, the application server cluster 20 includes three master servers 22 and three backup servers 24. Each of the three master servers 22 is arranged with one of the three backup servers 24. When a master server 22 fails, the backup server 24 arranged with the failed master server 22 will replace the failed master server 22 to assume the job of the failed master server 22. The three master servers 22 are connected to a balancer 26 to balance their workload. The balancer 26 may be a gateway, a router or a DNS server. However, the structure shown in FIG. 2 still leads to waste of resource because when the three master servers 22 and the three backup servers 24 can function well, the workload is only shared among the three master servers 22, the three backup servers 24 are left with no work.

### Summary of the Invention

The present invention aims at providing a method of operating a server system and a server system, whose availability is higher than conventional server system operating methods and server system.

This is achieved by a method and a server system according to the claims here below. The dependent claims pertain to corresponding further developments and improvements.

As will be seen more clearly from the detailed description following below, the claimed method of operating a server system includes providing an ARP (Address Resolution Protocol) table in a gateway, the ARP table corresponding a first external IP (Internet protocol) address of a first application server to a first MAC (Media Access Control) address of a first external network card of the first application server, and corresponding a second external IP address of a second application server to a second MAC address of a second external network card of the second application server; connecting the first application server to the gateway; connecting the second application server to the gateway; the first application server and the second application server checking if each other has failed; and if the first application server has failed, registering the first external IP address to the second external network card, and updating the ARP table so as to correspond the first external IP address to the second MAC address. The server system comprises the gateway, the first application server and the second application server.

As will be seen more clearly from the detailed description following below, the claimed server system includes a first application server, a second application server, a gateway and a computer readable medium. The gateway is connected to the first application server and the second application server. The gateway has an ARP (Address Resolution Protocol) table corresponding a first external IP (Internet protocol) address of the first application server to a first MAC (Media Access Control) address of a first external network card of the first application server, and corresponding a second external IP address of the second application server to a second MAC address of a second external network card of the second application server. The computer readable medium has a computer program stored therein configured to control the first application server, the second application server and the gateway to perform following steps: controlling the first application server and the second application server to check if each other has failed; and if the first application server has failed, registering the first external IP address to the second external network card, and updating the ARP table so as to correspond the first external IP address to the second MAC address.

The method of operating a server system and the server system according to the present invention have higher availability so as to reduce the waste of resource caused by idle application servers. Furthermore, according to the method and the server system of the present invention, self-checking and self-rehabilitation is performed to detect and repair a failed application server by checking the keep-alive channel of the application server as compared with conventional products.

### Brief Description of the Drawings

In the following, the invention is further illustrated by way of example, taking reference to the accompanying drawings. Thereof
FIG. 1 is a diagram of a master-slave structure including an application server cluster and a client terminal according to prior art;
FIG. 2 is a diagram of a structure of a backup system including an application server cluster and a client terminal according to prior art;
FIG. 3 is a diagram of a structure of a server system able to perform failover according to an embodiment of the present invention;
FIG. 4 is a diagram of how application servers and the gateway connected with one another in the server system of FIG. 3; and
FIG. 5 is a flowchart of the operation method of the server system of FIG. 3.

### Detailed Description

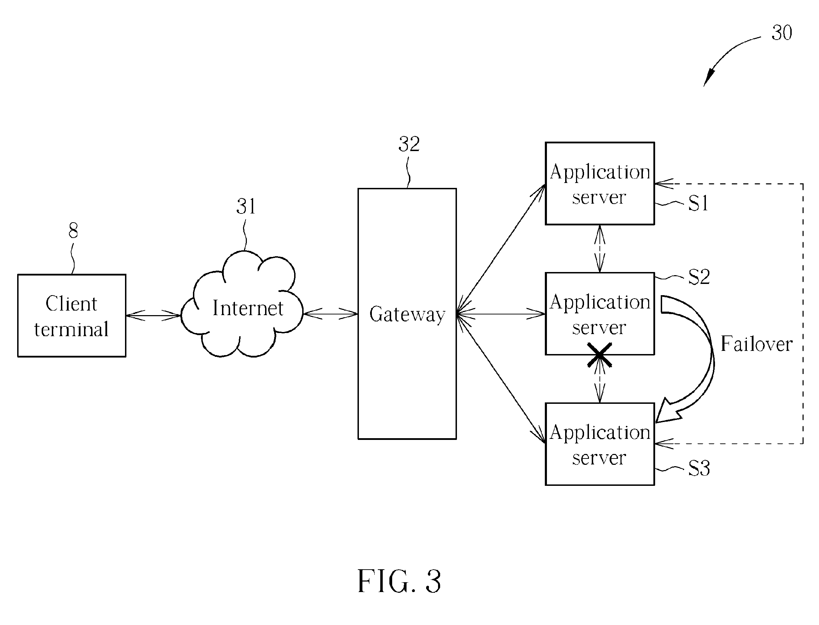

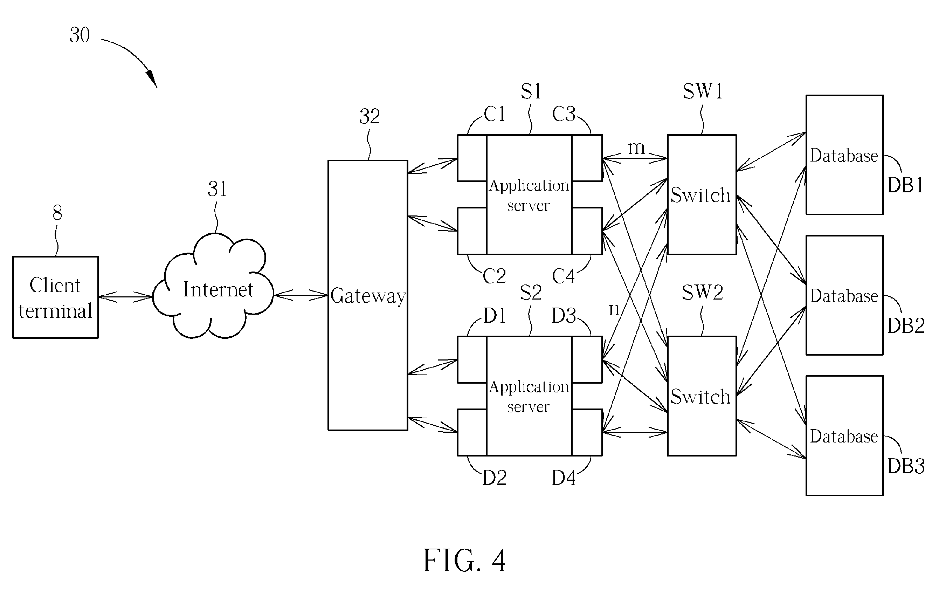

For an application server cluster to achieve high-availability (HA) to reduce downtime of application servers, the present invention discloses a server operation system and an operation method thereof applicable to cloud service. This is illustrated by the failover structure in FIG. 3 and the link between any two application servers in FIG. 4.

FIG. 3 illustrates a server system 30 capable of performing failover according to an embodiment of the present invention. A client terminal 8 is connected to a server system 30 via an internet 31. The server system 30 has a gateway 32 and a plurality of application servers S1, S2 and S3. Requests from the client terminal 8 is sent to the gateway 32 via the internet 31, and the gateway 32 allocates the requests from the client terminal 8 to the application servers S1, S2 and S3 evenly through Round-Robin Domain Name System. Each of the application servers S1, S2 and S3 checks the status of one another through keep-alive channels. When one of the application servers S1, S2 and S3 has failed to be in service, failover is performed. For example, the third application server S3 checks the keep-alive channel of the second application server S2 to see if the second application server S2 is still alive. If the keep-alive channel of the second application server S2 is turned off, the second application server S2 has failed. As shown in FIG. 3, the second application server S2 is marked with a "x" to indicate that it has failed, and failover is performed at this time to transfer workload of the second application server S2 to the third application server S3. After performing the failover, the gateway 32 allocates the workload which should originally be allocated to the second application server S2 to the third application server S3, and the second application server S2 stops receiving requests from the client terminal 8. After the second application server S2 is alive again, failback is performed to enable the second application server S2 to handle the requests from the client terminal 8. The above mentioned checking process for checking if the second application server S2 has failed or has recovered is performed by checking the status of the keep-alive channels of the application servers S1, S2 and S3 through the connections (shown as the dotted lines of FIG. 3) between any two of the application servers S1, S2 and S3. As shown in FIG. 3, the application server cluster disclosed by the present invention is different from the hierarchical structure of the prior art shown in FIG. 1 and FIG. 2. The prior art application server clusters 10, 20 need to be equipped with backup servers 14, 24. The backup servers 14, 24 though alive are left idle when the master servers 12, 22 are also alive. The embodiment in FIG. 3 utilizes a peer-to-peer structure. Whenever an application server is alive, it is used to share the workload received by the gateway 32. When an application server has failed, failover is performed to transfer the workload to another alive application server. Thus no more alive application server is left idle.

As for details of failover, FIG. 4 illustrates how two application servers S1 and S2 and the gateway 32 are connected with one another in the server system 30 of FIG. 3. The first application server S1 has two external network cards C1, C2 and two internal network cards C3, C4. The second application server S2 has two external network cards D1, D2 and two internal network cards D3, D4. Normally an external IP (internet protocol) address is stored in each of the external network cards C1 and D1 to link to the gateway 32. The external network cards C2 and D2 are used as backup external network cards and do not have external IP addresses. However, the internal network cards C3 and C4 will simulate an internal IP address through a virtual network interface of the second application server S2, and the internal network cards D3 and D4 will simulate another internal IP address through a virtual network interface of the second application server S2. The application servers S1 and S2 use the internal IP address created by the internal network cards C3 and C4 and the internal IP address created by the internal network cards D3 and D4 to talk to one another via the switches SW1 and SW2 so as to check the status of one another. Further the switches SW1 and SW2 can connect with databases DB1, DB2 and DB3. That is, the virtual network interface simulated by the internal network cards C3 and C4 is the keep-alive channel of the first application server S1, and the virtual network interface simulated by the internal network cards D3 and D4 is the keep-alive channel of the second application server S2. In FIG. 4, the gateway 32 may be considered as a break point of the internal and external networks. The client terminal 8 and the internet 31 belong to the external network. The server cluster formed by a plurality of application servers such as application servers S1 and S2, the switches SW1 and SW2, and a plurality of databases DB1, DB2 and DB3 belong to the internal network. Each of the application servers S1 and S2 is connected to the switches SW1 and SW2 via intranet connections, for example, a plurality of Ethernet cables. In this way, the first application server S 1 can be connected to another application server S2 via the switches SW1 and SW2 so as to form the peer-to-peer structure. In FIG. 4, only two application servers S 1 and S2 are shown to represent a server cluster. However, more application servers can be used to form a network with the peer-to-peer structure.

In the server system 30 of FIG. 4, the application servers S1 and S2 can still operate without the external network cards C2 and D2 and the internal network cards C4 and D4 because the external network cards C2 and D2 are just backup external network cards, and the internal network cards C4 and D4 are adopted to speed up the network traffic. Even without the switch SW2, the server system 30 of FIG. 4 can still operate with only the switch SW1 because the switch SW2 is only a spare switch. When the network traffic is heavy, the switch SW2 can be used to support twice as much network traffic.

In FIG. 3, the application servers S1 to S3 of the server system 30 can detect the status of one another through keep-alive channels. For example in FIG. 4, the internal network card C3 of the first application server S1 is connected to the switch SW1 via a physical connection m. The internal network card D3 of the second application server S2 is connected to the switch SW1 via a physical connection n. The second application server S2 can then check the status of the first application server S 1 via the physical connection n and the physical connection m by checking if the keep-alive channel of the first application server S 1 is still turned on. And the first application server S 1 can check the status of the second application server S2 via the physical connection m and the physical connection n by checking if the keep-alive channel of the second application server S2 is still turned on. The path formed with the physical connections m and n and the switch SW1 between the application servers S1 and S2 is corresponding to the dotted line between the application servers S1 and S2 in FIG. 3. Likewise, because the peer-to-peer structure is used to build the internal network, either the application servers S2 and S3 or the application servers S1 and S3 are connected through the switch SW1.

The checking of whether a keep-alive channel is turned on can be performed through a TCP/IP (Transmission Control Protocol/ Internet Protocol) connection or PING (Packet Internet Groper) commands. Take FIG. 4 as an example, if a TCP/IP connection is formed between the application servers S1 and S2 via the switch SW1, when any hardware failure has disabled the first application server S1, the keep-alive channel of the first application server S1 (that is the virtual network interface created by the internal network cards C3 and C4) is shut down accordingly. The said "hardware failure" may be a hardware failure inside the first application server S 1 such as a bad sector of a hard drive, the disconnection of the network connected to the first application server S1, or a network card such as C 1 failure. When the keep-alive channel of the first application server S 1 is shut down, the second application server S2 can instantly detect that the first application server S1 has failed to provide service via the TCP/IP connection. Another way to check the status of a keep-alive channel is through PING commands. For example, the second application server S2 shown in FIG. 4 may periodically send PING commands to the first application server S1 via the path formed with the physical connections m and n and the switch SW1, and periodically receive replies from the first application server S1 to confirm that the first application server S 1 is still alive. If the second application server S2 detects that the first application server S 1 has stopped responding to the PING commands sent by the second application server S2, the second application server S2 can conclude that the first application server S 1 has failed to operate normally. The difference between the above mentioned two ways is that using PING commands to check if another application server has failed is less real-time than using TCP/IP connection because the PING commands are sent periodically, but using PING commands takes less resource than building one or more TCP/IP connections among application servers.

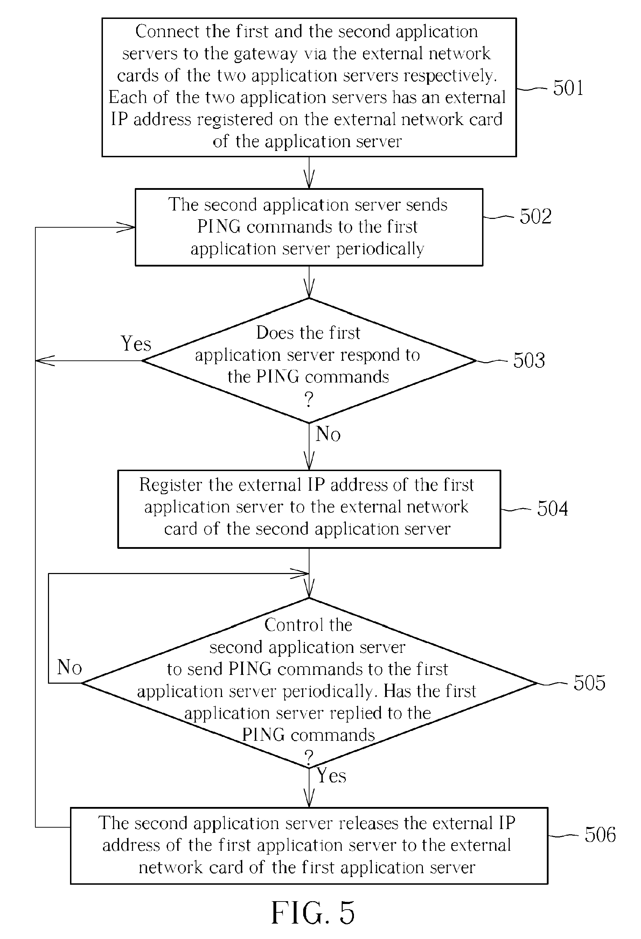

Taking the first application server S1 and S2 of FIG. 4 as an example, the following steps explain an operation method for the server system 30, that is the operation method for the server system formed in a peer-to-peer structure of FIG. 4 with high-availability (HA). FIG. 5 shows a flowchart of the operation method of the server system 30. The operation method includes the following steps:
Step 501: connect the first application server S1 to the gateway 32 via the external network card C1, and connect the second application server S2 to the gateway 32 via the external network card D1. The first application server S1 has an external IP address registered on the external network card C1. The second application server S2 has an external IP address registered on the external network card D1;
Step 502: the second application server S2 periodically sends PING commands to the first application server S 1 to check if the first application server S 1 has failed;
Step 503: if the first application server S1 responds to the PING commands sent by the second application server S2, the first application server S 1 is considered to function normally and has an unblocked keep-alive channel, go to step 502; if the first application server S 1 has stopped responding to the PING commands sent by the second application server S2, the second application server S2 concludes that the first application server S1 has failed and the keep-alive channel of the first application server S 1 has been turned off, go to step 504;
Step 504: update the ARP (Address Resolution Protocol) table stored inside the gateway 32 so as to register the external IP address of the first application server S 1 to the external network card D1 of the second application server S2 so that the external network card D1 of the second application server S2 concurrently has two external IP addresses (i.e. the external IP address corresponding to the first application server S1 and the external IP address corresponding to the second application server S2);
Step 505: control the second application server S2 to periodically send PING commands to the first application server S 1 to check if the first application server S 1 has recovered by checking if the first application server S1 has replied to the PING commands. If the first application server S1 has replied to the PING commands, go to step 506, else repeat step 505;
Step 506: after the first application server S1 has replied to the PING commands sent by the second application server S2, determine that the first application server S1 has recovered because the keep-alive channel of the first application server S1 is up and running again, and the connection between the gateway 32 and the first application server S1 has also recovered. At this time, the ARP table in the gateway 32 is updated. The external IP address corresponding to the first application server S 1 is released from the external network card D 1 of the second application server S2. The external IP address corresponding to the first application server S 1 is registered to the external network card C 1 of the first application server S1 so that the first application server S 1 can access data from the gateway 32; go to step 502.

In step 504, because the first application server S 1 has failed, the external network card D1 of the second application server S2 (acting as a back-up server for the first application server S1) is registered with two external IP addresses, namely, the external IP address corresponding to the second application server S2 and the external IP address corresponding to the first application server S 1 concurrently. At this time, the requests from the client terminal 8 and originally planned to be sent to the first application server S 1 are changed to be sent to the second application server S2 by looking up the updated ARP (Address Resolution Protocol) table stored in the gateway 32. The ARP table stores the correspondence between an external IP address and a MAC (Media Access Control) address. An MAC address of each network card is determined when the network card is produced. In short, the second application server S2 can act as a back-up server of the first application server S 1 and take workload of the first application server S 1 when the first application server S 1 malfunctions.

After the first application server S1 has recovered from malfunction either by performing self-rehabilitation (also known as "self-healing" in the field of computer science) or by being repaired by an technician, as described in step 506, the first application server S1 may send an ARping command to the gateway 32 to update the mentioned ARP table, and the first application server S1 turns on the external network card C1 by itself and/or by being registered with the external IP address of the first application server S 1 so as to rebuild the connection with the gateway 32 and the external internet (including the internet 31 and the client terminal 8). Hence, the first application server S 1 can receive the requests from the client terminal 8 and the internet 31 via the gateway 32 and provide service again.

Further, each of the application servers S1 to S3 shown in FIG. 3 and the application servers S1 to S2 shown in FIG. 4 can perform self-checking in normal time or perform self-rehabilitation when failing. The mentioned self-checking may be a periodical self-checking including checking status of internet connection, status of workload and functions of hardware. If an application server has passed a self-checking, the application server keeps its keep-alive channel (i.e. the virtual network interface generated by its internal network cards) running. Each of the application servers S1 to S3 can execute a predetermined program to perform the mentioned self-rehabilitation when failing to pass the self-checking, for example, running the programs again when the programs are aborted abnormally or are unable to provide normal services, and resetting the external network card C1, D1 or registering the external IP address to the external network card C2, D2 instead of the external network card C1, D 1 when the internet connection terminates. If a failed application server fails to perform the self-rehabilitation, the application server shuts down its keep-alive channel. Hence, in steps 501 and 502, all of the application servers S1 to S3 of the server system 30 need to perform periodical self-checking to keep its keep-alive channel up and running.

In step 504, the process of registering the external IP address of the first application server S 1 to the external network card D 1 of the second application server S2 is called failover. Take FIG. 4 for example, when the first application server S1 fails to pass self-checking, or the keep-alive channel of the first application server S1 is detected to be no longer running through the TCP/IP connection or PING commands, the first application server S 1 is determined to have failed. At this time, failover is performed to direct the burden of the first application server S 1 to the second application server S2. The second application server S2 starts to handle the workload of the application server S 1 in addition to its own workload for the client terminal 8 via the internet 31.

In step 505, take FIG. 4 for example, the second application server S2 checks if the first application server S1 has recovered from malfunction through PING commands or the TCP/IP connection. That is, the second application server S2 checks if the keep-alive channel of the first application server S1 (on which a failover has been performed) has been opened again through PING commands or the TCP/IP connection between the application servers S1 and S2. Take PING commands for example, if the keep-alive channel of the first application server S1 has been opened again, the first application server S1 replies to PING commands sent by the second application server S2 to inform the second application server S2 that the first application server S 1 has recovered. In step 506, the second application server S2 releases the external IP address of the first application server S1 and stops receiving workload assigned to the first application server S1. The external IP address of the first application server S 1 is registered at the external network card C1 of the first application server S1 to access data from the gateway 32. The process is called "failback". After performing failback, the first application server S1 can provide service, and the second application server S2 stops substituting the first application server S 1 to provide service.

Compared to the prior art, all of the application servers in the embodiments of the present invention are able to provide service at the same time. Each of the application servers acts as a back-up server of another server in the server system through the switches because the application servers are formed in a peer-to-peer structure. Hence, waste of resource in the prior art caused by idle application servers in the hierarchical structure is prevented. The situation that the back-up servers are idle while only master servers provide service even when all application servers can function normally (as shown in FIG. 1 and FIG. 2) is avoided according to an embodiment of the present invention. Moreover, the application server used in the embodiment of the present invention can perform self-checking and self-rehabilitation, so each of the application servers performs self-checking periodically to check the statuses of all software applications, hardware and network connections. If an application server fails to pass the self-checking, the self-rehabilitation is performed to repair the application server by running a self-repairing program. If the self-rehabilitation fails, the keep-alive channel of the application server is down so that a failover can be performed to use another application server to substitute the failed application server. In addition to self-checking, the application servers in the server system of the present invention can check the status of one another with PING commands or through TCP/IP connections. After detecting the keep-alive channel of an application server is down, failover is performed to isolate the application server and have another application server to handle the workload of the failed application server until the failed application server recovers and its keep-alive channel is up and running. The process of failback is performed for the recovered application server to handle its workload again, thereby enhancing the durability and availability of the server system.

## Claims

1. A method of operating a server system (30), the server system (30) comprising a gateway (32), a first application server (S1) and a second application server (S2), the method being **characterized by**:
providing an Address Resolution Protocol table in the gateway (32), the Address Resolution Protocol table corresponding a first external Internet protocol address of the first application server (S1) to a first Media Access Control address of a first external network card (C1) of the first application server (S1), and corresponding a second external Internet Protocol address of the second application server (S2) to a second Media Access Control address of a second external network card (D1) of the second application server (S2);
connecting the first application server (S1) to the gateway (32);
connecting the second application server (S2) to the gateway (32);
the first application server (S1) and the second application server (S2) checking if each other has failed; and
if the first application server (S1) has failed, registering the first external Internet Protocol address to the second external network card (D1), and updating the Address Resolution Protocol table so as to correspond the first external Internet Protocol address to the second Media Access Control address.

2. The method of claim 1, further **characterized by**:
after the failed first application server (S1) has recovered,
registering the first external Internet Protocol address to the first external network card (C1),
releasing the first external Internet Protocol address from the second external network card (D1), and
updating the Address Resolution Protocol table so as to correspond the first external Internet Protocol address to the first Media Access Control address.

3. The method of claim 1 or 2, wherein the step of the first application server (S1) and the second application server (S2) checking if each other has failed is **characterized by** that the first application server (S1) and the second application server (S2) periodically sending Packet Internet Groper commands to each other to check if each other has failed.

4. The method of claim 1 or 2, wherein the step of the first application server (S1) and the second application server (S2) checking if each other has failed is **characterized by** that the first application server (S1) and the second application server (S2) checking if each other has failed via Transmission Control Protocol/Internet Protocol.

5. The method of any of claims 1-4, further **characterized by**:
the first application server (S1) and/or the second application server (S2) performing self-checking.

6. The method of any of claims 1-5, further **characterized by**:
the first application server (S1) and/or the second application server (S2) performing self-rehabilitation.

7. A server system (30), comprising:
a first application server (S1); and
a second application server (S2);
**characterized in that** the server system (30) further comprises:
a gateway (32) connected to the first application server (S1) and the second application server (S2), the gateway (32) having an Address Resolution Protocol table corresponding the a first external Internet Protocol address of the first application server (S1) to a first Media Access Control address of a first external network card (C1) of the first application server (S1), and corresponding a second external Internet Protocol address of the second application server (S2) to a second Media Access Control address of a second external network card (D1) of the second application server (S2); and
a computer readable medium having a computer program stored therein configured to control the first application server (S1), the second application server (S2) and the gateway (32) to perform following steps:
controlling the first application server (S1) and the second application server (S2) to check if each other has failed; and
if the first application server (S1) has failed, registering the first external Internet Protocol address to the second external network card (D1), and updating the Address Resolution Protocol table so as to correspond the first external Internet Protocol address to the second Media Access Control address.

8. The server system (30) of claim 7, further **characterized in that** the computer program is further configured to control the first application server (S1), the second application server (S2) and the gateway (32) to perform following steps:
after the failed first application server (S1) has recovered,
registering the first external Internet Protocol address to the first external network card (C1),
releasing the first external Internet Protocol address from the second external network card (D1), and
updating the Address Resolution Protocol table so as to correspond the first external Internet Protocol address to the first Media Access Control address.

9. The server system (30) of claim 7 or 8, wherein controlling the first application server (S1) and the second application server (S2) to check if each other has failed is **characterized by**:
controlling the first application server (S1) and the second application server (S2) to periodically send Packet Internet Groper commands to each other to check if each other has failed.

10. The server system (30) of claim 7 or 8, wherein controlling the first application server and the second application server to check if each other has failed is **characterized by**:
controlling the first application server and the second application server to check if each other has failed via Transmission Control Protocol/Internet Protocol.

11. The server system (30) of any of claims 7-10, further **characterized in that** the computer program is further configured to control the first application server (S1), the second application server (S2) and the gateway (32) to perform a following step:
controlling the first application server (S1) and/or the second application server (S2) to perform self-checking.

12. The server system (30) of any of claims 7-11, further **characterized in that** the computer program is further configured to control the first application server (S1), the second application server (S2) and the gateway (32) to perform a following step:
controlling the first application server (S1) and/or the second application server (S2) to perform self-rehabilitation.
